# EUROPEAN PATENT SPECIFICATION

(11) **EP 3 433 421 B1**
(45) Date of publication and mention of the grant of the patent: **14.07.2021**
(21) Application number: 17726662.4
(22) Date of filing: 24.03.2017
(51) Int. Cl.: D21H 13/10, D21H 13/24, D21H 13/26, D21H 13/36, D21H 17/28, D21H 17/34, D21H 23/26

(54) **METHOD OF PRODUCING A FIBROUS WEB CONTAINING NATURAL AND SYNTHETIC FIBRES**
VERFAHREN ZUR HERSTELLUNG EINER FASERSTOFFBAHN MIT NATÜRLICHEN UND SYNTHETISCHEN FASERN
PROCÉDÉ DE PRODUCTION DE BANDE FIBREUSE CONTENANT DES FIBRES NATURELLES ET SYNTHÉTIQUES

(30) Priority: 24.03.2016 FI 20165259
(43) Date of publication of application: 30.01.2019
(73) Proprietor: Paptic Ltd, 02150 Espoo (FI)
(72) Inventor: KINNUNEN-RAUDASKOSKI, Karita, 02150 Espoo (FI); TORNIAINEN, Esa, 02150 Espoo (FI); MUSTONEN, Tuomas, 02150 Espoo (FI); JUVONEN, Marja, 02150 Espoo (FI)
(74) Representative: Laine IP Oy
(86) International application number: PCT/FI2017/050210
(87) International publication number: WO 2017/162927

(56) References cited:
- EP-A1- 0 889 151
- WO-A1-98/32906
- US-A- 4 081 318
- US-A- 5 204 165
- US-A- 5 840 787
- US-A1- 2007 271 889
- US-A1- 2014 311 694

## Description

The present invention relates to a method according to the preamble of claim 1 of manufacturing a fibre web comprising a fibre matrix formed by natural fibres and possibly synthetic fibres.

According to a method of the present kind, a water-containing, planar fibre layer is provided from natural fibres and synthetic fibres, which layer comprises an aqueous phase and a fibrous phase, and the fibre layer is dried in order to remove the aqueous phase, whereby the natural fibres and the synthetic fibres together form a fibre matrix.

It has long been a major challenge to manufacture, using paper-making processes, a fibre web which has plastic-like properties The reason for this is the difficulty of integrating the plastic-like components, for example synthetic plastic fibres and binders, into the structure.

Here, the "plastic-like" or "similar to plastic" properties mean that the fibre structure is stretchable and, at the same time, it has processing and operating properties, such as heat sealability, fracture toughness and tear resistance. Most suitably, the fibre structure also has good water resistance.

Obtaining plastic-like properties has been aimed at in fibre webs, besides by using traditional creping methods, also for example by mechanical treatment of the fibre webs. The Fibreform-cardboard of the BillerudKorsnäs manufacturer is one example of the application of these techniques, likewise the laminating or coating of the fibre web during the processing stage (for example, extrusion coating).

By layering fibre webs with plastic, for example by extrusion coating, the aim has also been to generate plastic-like properties, but these methods do not provide stretching and the methods require a separate process.

Furthermore, according to a known technique, the paper is passed through two rollers moving at different speeds, and is micro-creped. This results in a paper which stretches in one direction, i.e. in the direction of the machine, but the stretching is only plastic or mechanical, and the method does not provide a tough structure, in particular not fracture toughness. The investment costs of the equipment needed to implement the solution are high.

Examples of techniques used to generate stretchability are presented in the application publication WO 2011087438.

Adhesive material can be used either at the wet end or the dry end of the paper machine, or to increase the resistance of cardboard against wetting and against penetration of liquids, in particular aqueous liquids, and thus to provide a cellulosic material which possesses some degree of water repellency, as described in the FI Patent No. 63806. However, this process does not generate a stretchable fibre material.

Binder treatment has also been used to form non-woven structures, but in these structures the percentage of pulp fibres has typically been substantially less than half of the dry matter, and thus, for example, the importance of moisture for the applying of the binder and for generating the stretching has been minor, because of the amount of the synthetic components of the web. In addition, because of the low percentage of pulp fibre contained in the non-woven structure, the importance of the moisture for the prevention of the natural process of binding is insignificant compared to what takes place in our invention.

Definitions of the non-woven products are described in the ISO standard 9092 and the CEN EN standard 29092. Typically, the non-woven products comprise at least 50 % of synthetic fibres and other non-plant-based fibres, the length/thickness ratio of which is greater than 300, or they comprise at least 30 % of synthetic fibres, the length/thickness ratio of which is greater than 600, and the maximum density (virtual) is 0.40 g/cm³).

In the past, the aim has also been to manufacture plastic-like fibre structures by adding binders, such as latex, directly into the pulp slush, before the headbox. This method most often causes, among others, precipitation and fouling problems, as well as a lot of binder is consumed for other purposes than interbonding of the fibres. The addition of the latex into the fibre slush complicates the controllability of the fibre product process, because the latex causes accumulation problems.

The prior art is further described in the publications JP 2010235720 A, JP 3351916 B2; US 5,009,747, US 2010/173138, US 6,562,193, US 2003/220039 and US 4,184,914.

With the known structures, which are mainly comprised of natural fibres, such as cellulose fibres, it has not been possible to generate stretching, and particularly, high fracture toughness, and other plastic-like properties (heat-sealability). In addition, treatment/coating/covering carried out in the processing stage requires a separate process and the costs are higher.

It is an aim of the present invention to eliminate at least some of the problems associated with the prior art and to provide a new type of fibre web, which comprises natural fibres and synthetic fibres and which has plastic-like properties.

In the present invention, it has unexpectedly been found that by incorporation of the binder treatment into a selected part of the production that is carried out in conjunction with the wet process (paper machine), it is possible for the binder to settle in the bonding points of the fibres in the fibre web. It has been found that moisture prevents the forming of hydrogen bonds in the web. A particular feature of the invention is the use of the moisture/water that is naturally present in the web for allowing settling of the binder once it is brought to the web and before these bonds are formed.

More specifically, the method according to the present invention is mainly characterized by what is stated in the characterizing part of Claim 1.

Considerable advantages are obtained by means of the present invention. Thus, by treating a weakly bonded fibre web, which comprises natural fibres, such as chemical or mechanical pulp fibres and synthetic fibres, a desired structure is obtained. Typically, the elongation of the structure in the direction of the machine is typically at least 5 %, for example approximately 5-20 %, for example 8-15 % , and in the cross-direction at least 5 %, for example 5-30 %, preferably 10-20 %, and the structure has good tear resistance properties, fracture toughness and heat sealability. The tear index values in the direction of the machine are typically at least 10 mNm²/g, for example 15-18 mNm²/g, and in the cross-direction at least 15 mNm²/g, for example 20-27 mNm²/g. The fracture toughness values of the structure are, in the direction of the machine and in the cross-direction at least 20 Jm/kg, for example 37-54 Jm/kg.

Preferably, the structure is formed by giving a binder treatment to a moist web, at a dry matter content (DMC) of approximately 20-45 %. Typically, the web that mainly comprises pulp fibres has this dry matter content within the areal entity that is formed of the webbing and drying sections of the paper machine, but in particular before the structure is completely dried. The moisture makes the web very receptive to the binder, and the moisture also prevents the formation of hydrogen bonds between the pulp fibres, and thus enables the binder to be placed between the fibres, including the pulp fibres, throughout the entire fibre structure. Thus, high stretchability, and in particular good mechanical properties that are required in the end use, such as tear resistance and fracture toughness, are obtained.

In one preferred embodiment, the fibre layer/web treatment is carried out by foam coating, which allows for an even application of the binder, a good uniformity in the thickness direction, and substantial use of the binder of the dry matter. In addition, the foam coating provides the possibility of using large particle-sized additives in the coating, such as synthetic fibres and particles.

The present invention allows for an efficient way of producing such new fibre products which have plastic-like properties. Examples of these are good fracture toughness, tear resistance and stretching.

Furthermore, with the present method, it is possible to flexibly functionalise fibre webs, for example by the addition of functional additives to soften the web/to increase the elongation, or to improve the heat-sealing. In addition, the present method can be used, unlike previous technologies, to treat the entire web uniformly in the thickness direction, or by means of adjustment, to a desired treatment gradient.

In the following, the preferred embodiments of the present invention will be examined more closely on the basis of the accompanying drawings.
Figure 1 shows a diagram of different treatment profiles in the thickness direction,
figure 2 shows a basic diagram of the binder applying unit,
figures 3 and 4 show microscopic images of the cross-sections of latex coated sheets, which show the distribution of the latex in the cross-direction of the sheet, and
figure 5 is a microscopic image of the z-directional distribution of CaCO₃, in a sheet which is coated with latex that comprises calcium carbonate.

Here, the above-mentioned term "application" means distribution and in general, bringing the binder onto the surface of the fibre layer. "Application unit" and "distribution units" are used interchangeably.

As will appear from the above, the present technology relates to a method of producing such a fibre web which comprises natural fibres and synthetic fibres and which fibres together form the fibre matrix of the fibre web. In order to improve the bonding between the fibres of such a fibre matrix, the fibre matrix also comprises a binder.

In a preferred embodiment, a water-containing, planar fibre layer is first formed from natural fibres and synthetic fibres, which layer comprises an aqueous phase and a fibre phase, after which the fibre layer is dried in order to remove the aqueous phase, whereby the natural fibres and the synthetic fibres together form a fibre matrix. A binder is incorporated into the fibre web by applying it onto top of, i.e. on the surface of, the water-containing fibre layer, and by allowing the binder to penetrate via the aqueous phase at least partially in between the fibres, before the fibre matrix forms.

It has been found that the aqueous phase of the fibre layer makes the fibre layer very receptive to the binder, and the moisture, i.e. the water, also prevents the formation of hydrogen bonds between the natural fibres, such as cellulose or lignocellulose fibres. In this case, it is possible to make the binder penetrate in between the cellulose fibres. When the fibre layer is dried and the water is removed from the fibre matrix, a high stretchability is achieved, when the binder joins the natural fibres to each other.

In one embodiment, the aqueous phase contained in the undried web is allowed to transport the binder, which is brought onto its surface, inside the web in such a way that, when the web dries, the material is bonded to the fibres thereby strengthening the web. In this case, the binder, which is applied onto the fibre layer, does not remain on the surface of the layer, instead, it penetrates via the aqueous phase in between the fibres before the hydrogen bonds between the fibres are formed.

In one embodiment, the binder is applied onto top of the water-containing fibre layer, when the solids content of this layer is at maximum two thirds of the weight of the fibre layer.

Typically, the dry matter content of the fibre layer is approximately 10-65 %, for example approximately 20-55 %, especially approximately 25-45 %. The percentages are calculated from the total weight of the fibre layer.

In one embodiment, it is possible to make the binder penetrate, in the z-direction of the fibre layer, from the application surface to a depth which is least 50 %, especially at least 70 %, of the total thickness of the fibre layer, and, preferably, at least part of the binder can be made to penetrate through the fibre layer all the way to the opposite surface of the layer.

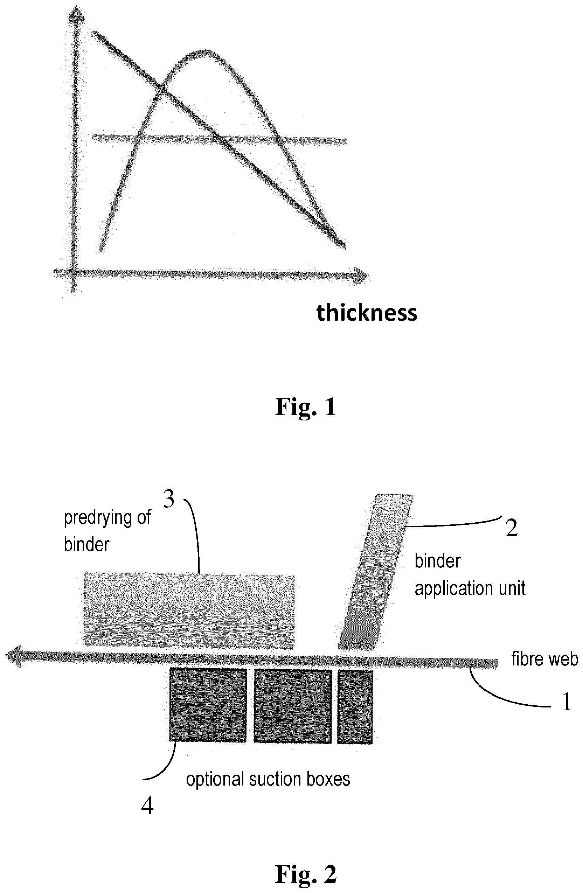

Figure 1 shows an example of a binder concentration gradient.

Advantageously, the binder is applied onto the top of the water-containing fibre layer by means of a contactless application method. This is particularly suitable for the above-mentioned dry matter percentages.

Examples of suitable application methods are foam coating, spray coating, and curtain coating, foam coating being particularly preferred.

The binder can be applied onto the fibre layer at one or at several points. Thus, in one embodiment, it is possible to arrange 2-5 sequential coating points in order to apply the binder onto the fibre layer. The fibre layer can be dried between the application runs.

In an embodiment, the binder is applied in the form of an aqueous solution or an aqueous dispersion. By using water as a carrier for the binder, it is possible to improve the penetration of the binder into the fibre matrix to be formed, in between the fibres, especially the natural fibres.

In one embodiment, the composition of the binder which is brought to the fibre layer is such that its water content is at maximum the same as, preferably lower than, the water content of the fibre layer at that application point.

Typically, the fibre web is planar and it comprises two opposite planar surfaces, the binder being applied onto at least one of its planar surfaces. However, it is also possible to apply the binder to both sides, or, if there are several sequential application points, as described below, the binder can be brought at one point only to one surface and at another application point to both sides of the fibre layer.

It is possible to facilitate the penetration of the binder into the fibre web, during the application or immediately thereafter, by directing a suction to the binder from the opposite side of the fibre web.

Thus, in order to improve the uniformity in the thickness direction, suction is used during the treatment, particularly below the coater and in the section subsequent to the coater.

One application solution is described in Figure 2. As it shows, binder is applied onto the surface of the fibre layer 1, in the application unit 2. The binder is dried by means of the drying units 3. These can be, for example, radiant heaters or hot air blowers. In order to facilitate the absorption of the binder, it is possible to arrange suction boxes 4, on the side opposite to the application unit.

In this case, it is more preferable to use a wire to carry the fibre web (before drying). A paper and cardboard embodiment is described in more detail below.

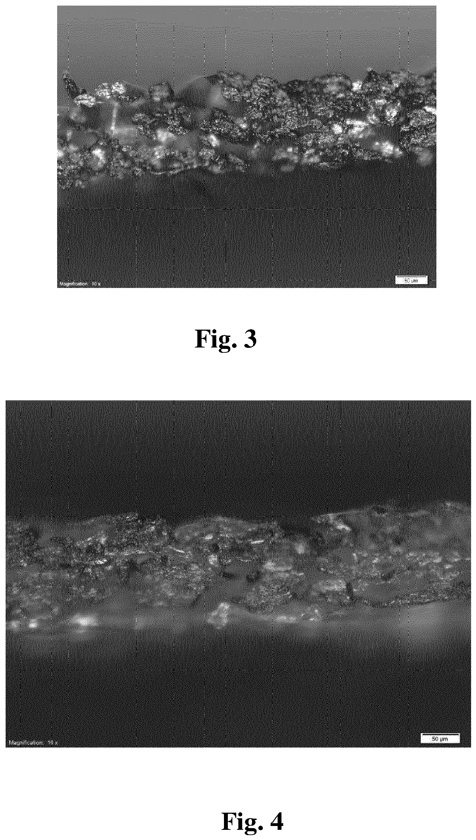

Figures 3 and 4 (see also Example 2) show how the latex penetrates through a coated sheet. Figure 3 shows a sample into which latex is brought, and Figure 4 shows a corresponding sample which comprises latex.

Into the binder it is possible to add substances which are capable of modifying the properties of the fibre web, such as synthetic fibres or plasticisers, such as sorbitol or glycerol, or similar polyols, or fine material, such as cellulose-based fine material or nanocellulose.

It is also possible to bring additives to the fibre web by means of or together with the binder, with which additives it is possible to improve the mechanical and thermal properties of the fibre web, such as heat-sealability, stretchability, air permeability, printability, thermal conductivity, water vapour permeability, absorption characteristics and friction.

By means of or together with the binder, it is also possible to bring other components, such as pigments and fillers, and hydrophobic sizes, such as ASA (alkyl succinic anhydride) or AKD (alkyl ketene dimer), and other typical additives used in papermaking.

The fibres used in the materials according to the present invention, may be plant-based, i.e. natural fibres, synthetic fibres, and mixtures and combinations thereof.

Natural fibres are typically cellulose or lignocellulose fibres. In particular, the fibres are sourced from cellulose or lignocellulose raw materials, for example, by using chemical or semi-chemical pulping or defibering. The fibres can also be mechanical pulp fibres or recycled fibres.

In general, the natural, i.e. plant-based fibres, which are used in the present invention, can be comprised of or sourced from chemical pulp, such as sulphate or sulphite pulp, organosolv pulp, recycled fibres and mechanical pulp, which is produced, for example, by refining or by grinding. Examples of such masses are: refiner mechanical pulp, i.e. RMP, and pressurised refiner mechanical pulp, i.e. PRMP, pre-treatment refiner chemical alkaline peroxide mechanical pulp, i.e. P-RC APMP, thermomechanical pulp, i.e. TMP, thermomechanical chemical pulp, i.e. TMCP, high-temperature TMP, i.e. HT-TMP, RTS-TMP, alkaline peroxide pulp (APP), alkaline peroxide mechanical pulp (APMP), alkaline peroxide thermomechanical pulp (APTMP), Thermopulp, groundwood pulp (groundwood pulp, i.e. GW, or stone groundwood, i.e. SGW), pressurised groundwood pulp, i.e. PGW, as well as super pressure groundwood pulp, i.e. PGW-S, thermo groundwood pulp, i.e. TGW, or thermo stone groundwood pulp, i.e. TSGW, chemimechanical pulp, i.e. CMP, chemirefiner mechanical pulp, i.e. CRMP, chemithermomechanical pulp, i.e. CTMP, high-temperature chemithermomechanical pulp, i.e. HT-CTMP, sulphite-modified thermomechanical pulp (SMTMP), and reject CTMP, groundwood CTMP, semichemical pulp, i.e. SC, neutral sulphite, semi-chemical pulp (NSSC), high-yield sulphite pulp, i.e. HYS, biomechanical pulp, i.e. BRMP and the pulps which are produced with the OPCO process, blasting-cooking process, Bi-Vis process, dilution water sulphonation process, i.e. DWS, sulphnonated long fibres process, i.e. SLF, chemically treated long fibres process, i.e. CTLF, long fibre CMP process (LFCMP), sulphate wood pulp, mdf fibres, nanocellulose, cellulose fibres having an average particle size of less than 1000 nm, and modificates and mixtures thereof.

The pulp can be bleached or unbleached. The pulp can be sourced from hardwood or softwood. Examples of wood species are birch, beech, aspen such as the European aspen, poplar, alder, eucalyptus, maple, acacia, mixed tropical hardwood, pine, American spruce, hemlock, larch, European spruce, such as the Black Spruce or Norway Spruce, recycled fibre, as well as waste streams and secondary flows, which comprise fibres and which originate from the food industry or the wood and paper industry, as well as mixtures thereof.

It is also possible to use raw materials which are neither wood nor wood-containing, such as seed hair fibres, leaf fibres, bast fibres. Plant fibres can be sourced from, for example, cereal crop straws, wheat straw, reed canary grass, reed, flax, hemp, kenaf, jute, ramie, sisal, abaca, seeds, coir, bamboo, bagasse, cotton kapok, milkweed, pineapple, cotton, rice, cane, esparto grass, *Phalaris arundinacea*, and combinations thereof.

In one embodiment, the fibre web is produced by using essentially unground cellulose or lignocellulose fibres. The freeness of semi-chemical and mechanical fibres is at least 300 ml/min, for example more than 450 and preferably more than 600 ml/min and, correspondingly, the Schopper-Riegler number of chemical fibres is less than 35, for example under 25, preferably under 20.

In particular, the synthetic fibres are thermoplastic polymer fibres, such as polylactide, glycolic acid polymer, polyolefin, polyethylene terephthalate, polyester, polyamide, polyvinyl alcohol or bicomponent (bico) fibres. Examples of other fibres are regenerated cellulose fibres such as viscose, Lyocell, rayon, and Tencel fibres, and for example, carbon and glass fibres. Most suitably, polyolefin, polyester, polylactide or bico fibres or mixtures thereof, are used.

The fibre length is typically 3-100 mm, for example 5-40 mm and preferably 5-20 mm. The fibres typically have a thickness of 0.9-7 dtex, preferably 1.2-3.5 dtex.

Examples of the binders are natural binders and biopolymers, such as starch and starch modificates and derivatives, chitosans, alginates, and synthetic binders, for example latexes, such as vinyl acetate and acrylate latex and polyurethanes and SB latexes and mixtures thereof, and various copolymers, especially copolymers of synthetic binder polymers. Also, polyvinyl alcohol and polyvinyl acetate can be used.

The binder, such as latex, can be brought to the surface of the fibre layer in the form of binder foam. The air content of the foam is more than 50 %, for example approximately 65-95 %, such as 80-95 %.

In one embodiment, the percentage of natural fibres is at least 50 parts by weight, and of synthetic fibres at maximum 50 parts by weight. Most suitably, the percentage of natural fibres is approximately 60-95 parts by weight, especially 70-90 parts by weight, and of synthetic fibres 5-50 parts by weight, especially 10-30 parts by weight.

The grammage of the fibre web may vary widely and typically is approximately 10-200 g/m², especially approximately 20-150 g/m².

A sufficient amount of binder is added to ensure that its percentage of the dry weight of the dried fibre web is 5-40 %, preferably approximately 10-30 %. A dried fibre web is generated, the stretching of which in the direction of the machine is typically at least 5 %, for example approximately 5-20 %, for example 8-15 %, and in the cross-direction, at least 5 %, for example 5-30 %, preferably 10-20 %.

In one embodiment, the fibre web is prepared at a paper or cardboard machine. In such an embodiment,
- a fibre suspension is formed of natural fibres and synthetic fibres,
- this fibre suspension is webbed to a smooth fibre layer, and
- this fibre layer is dried in order to prepare the fibre web.

Typically, binder is applied onto the fibre layer when the solids content of the fibre layer is approximately 20-50 %. In particular, the binder is applied onto the fibre layer when this layer is, for example, in a free draw or supported, in which case the binder is brought to the fibre layer at a point which is located within the areal entity that is formed of the webbing and drying sections of the paper machine.

Also in the paper and cardboard machine solution, after the application of the binder, the binder is dried, for example by directing most suitably heating onto the fibre layer, as shown in Figure 2.

The fibre web is prepared by using foam webbing. In this respect, reference is made to FI Patent Application No. 20146033.

Based on the above, practical experiments were performed.

A material comprising natural fibres and synthetic fibres was produced into a web by foam forming of a fibre pulp which comprised, by weight, 70-90 % pulp (bleached softwood sulphate pulp) and 10-30 % synthetic fibres (for example PP, PET BiCo). A fibre web was obtained, the weight of which was 20-100 g/m². Typically, the average length of the fibres was 0.5-100 mm.

The fibre web was treated with a binder when the dry matter percentage of the web was 20-45 %. This percentage of dry matter was obtained between the wire and the drying sections of the paper machine.

In a comparative test, in which the fibre web was prepared in accordance with FI Application No. 20146033, a base web was obtained, the tensile strength of which was lower than 1 kN/m and the elongation lower than 5 %. The base web did not comprise a binder.

The binder treatment was carried out by using foam coating, by adding approximately 5-40 % of a binder, preferably approximately 10-30 %.

The binders used were vinyl acetate and acrylate latex, which were applied at a dry matter percentage of approximately 20-50 %. After the binder treatment, the elongation of the fibre web in the machine direction is typically at least 5 %, for example approximately 5-20 %, for example 8-15 %, and in the cross-direction at least 5 %, for example 5-30 %, preferably 10-20 %.

The following examples illustrate the embodiments.

### Methods:

Elongation measurements were carried out according to the standard EN ISO 1924-2: 2008.

### Example 1. Comparison of the coated samples

Handsheets were prepared in laboratory conditions using foam webbing, from the above-mentioned materials.

The sheets were coated with a latex dispersion by using vacuum assisted foam coating, both before and after the drying of the base sheet. After the coating, the samples were dried in an oven for a period of 10 minutes. In the last step of the sheet production, the sheet was calendered with a laboratory calender. The grammage of the sheets thus obtained was 50 g/m² and the amounts of latex were 12 % (wet-coated) and 14 % (dry-coated).

The properties of the dried coated samples are shown in Table 1, where the tensile strengths of a wet base sheet and, respectively, of a dried base sheet, are given. The measurement conditions were as follows: 25 % RH, T = 24 °C.

**Table 1. Tensile strengths of laboratory sheets which were prepared by using foam and then coated**

| Sample name | Tensile strength kN/m | Stretching % | Breaking energy J/m² | Extension stiffness kN/m |
|---|---|---|---|---|
| Dry base sheet | 1.02 | 7.1 | 40.2 | 34.3 |
| Wet base sheet | 1.45 | 8.3 | 66.1 | 38.5 |

The measurements were not carried out under standardised conditions, but the purpose was merely to show the difference between the dry sheet and the wet sheet.

### Example 2. Distribution of the latex - a sample prepared in a pilot unit

A microscopic image was taken of the samples prepared in a pilot unit, which samples were prepared by coating the bottom web with a latex, in accordance with the present technology, and which image shows the distribution of the latex in the z-direction of the web.

Figures 3 and 4 show the microscopic images. Only minor staining of the pulp fibres was observed in the samples having a high latex content (24 %), which indicates that the latex was evenly distributed throughout the sample.

### Example 3. Functionalisation of the web - addition of filler

A bottom web that was prepared with a pilot scale foam webber was brought to the process of foam coating by using a laboratory scale coater. Calcium carbonate (CaCO₃) was added into the latex dispersion prior to coating.

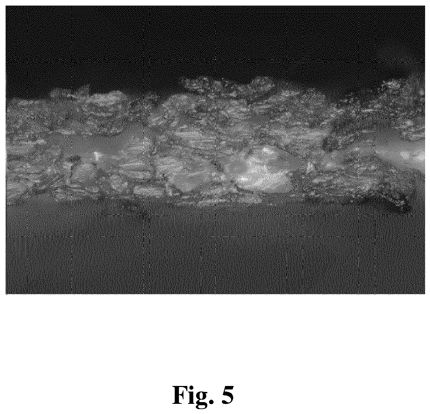

Figure 5 shows the z-directional distribution of the CaCO₃. The CaCO₃ particles are highlighted in red.

### References

WO 2011087438
FI 63806
JP 2010235720 A
JP 3351916 B2
US 5,009,747
US 2010/173138
US 6,562,193
US 2003/220039
US 4,184,914

## Claims

1. A method of manufacturing a fibre web, which comprises a fibre matrix formed by natural fibres and possibly synthetic fibres, according to which method
- a water-containing, planar fibre layer is provided from natural fibres and possibly synthetic fibres, which layer comprises an aqueous phase and a fibrous phase, and
- this fibre layer is dried in order to remove the aqueous phase, whereby the natural fibres and possible synthetic fibres together form a fibre matrix,
**characterized by** that
- applying onto the water-containing, planar fibre layer a binder, which is allowed to penetrate via the aqueous phase at least partially in between the fibres before hydrogen bonds are formed between the fibres,
wherein the penetration of the binder into the fibre web, during the application or immediately thereafter, is facilitated by directing suction to the binder from the opposite side of the fibre web, and
wherein the fibre web is formed by using foam forming.

2. The method according to Claim 1, **characterized in that** the binder is applied onto the water-containing fibre layer, when the dry matter percentage of this layer is approximately 10-65 %, for example approximately 20-55 %, especially approximately 25-45 %.

3. A method according to Claim 1 or 2, **characterized in that** the binder is applied onto the water-containing fibre layer by means of a contactless application method, in particular by using foam coating, spray coating or curtain coating.

4. A method according to any of the preceding claims, **characterized in that** the binder is applied onto the water-containing fibre layer in the form of a solution or a gel, especially in the form of an aqueous solution or an aqueous dispersion.

5. A method according to any of the preceding claims, **characterized in that** a sufficient amount of binder is added to ensure that its percentage of the dry weight of the dried fibre web is 5-40 %, preferably approximately 10-30 %.

6. A method according to any of the preceding claims, **characterized in that** the elongation of the dried fibre web in the machine direction is at least 5 %, for example approximately 5-20 %, for example 8-15 %, and in the cross-direction at least 5 %, for example 5-30 %, preferably 10-20 %.

7. A method according to any of the preceding claims, **characterized in that** the fibre web is planar and is comprised of two opposite planar surfaces, in which case the binder is applied onto at least one of its planar surfaces.

8. A method according to any of the preceding claims, **characterized in that** to the binder are added substances which are capable of modifying the properties of the fibre web, such as pigments, fine material, such as cellulose-based fine material or nanocellulose, synthetic fibres or plasticisers.

9. A method according to any of the preceding claims, **characterized in that** to the fibre web are brought additives with which it is possible to improve the mechanical and thermal properties of the fibre web, such as heat sealability, stretchability, air permeability, printability, thermal conductivity, absorption characteristics and friction.

10. A method according to any of the preceding claims, **characterized in that** the natural fibres are cellulose or lignocellulose, and the synthetic fibres are thermoplastic polymer fibres, such as polylactide, glycolic acid polymer, polyolefin, polyamide, polyethylene terephthalate, polyester, polyvinyl alcohol or bicomponent (bico) fibres, or are regenerated cellulose fibres, such as viscose, rayon, Lyocell or Tencel fibres.

11. A method according to any of the preceding claims, **characterized in that** the binder is a natural binder or a biopolymer, such as starch or starch modificate or derivative, chitosan, alginate, or a synthetic binder, for example a latex, such as vinyl acetate and acrylate latex or a polyurethane or SB latex, polyvinyl alcohol or polyvinyl acetate, and mixtures and copolymers of these binders, in particular the binder is vinyl acetate or acrylate latex or a mixture thereof.

12. A method according to any of the preceding claims, **characterized in that** the latex is brought onto the surface of the fibre layer in the form of binder foam, the latex percentage of which is 10-30 % by weight.

13. A method according to any of the preceding claims, **characterized in that** the percentage of natural fibres is 60-95 parts by weight and of synthetic fibres 5-40 parts by weight, and the grammage of the fibre web is approximately 20-200 g/m².

14. A method according to any of the preceding claims, **characterized in that**
- a fibre suspension is formed of the natural fibres and synthetic fibres,
- the fibre suspension is formed into a smooth fibre layer by web-formation, and
- the fibre layer is dried in order to prepare the fibre web,
a binder being applied onto the fibre layer when the dry matter percentage of the fibre layer is approximately 20-50 %, preferably the web is formed at the paper machine and the binder is brought to the fibre layer at a point which is between the wire and the drying sections of the paper machine.

15. A method according to any of the preceding claims, **characterized in that** it is possible to make the binder penetrate, in the z-direction of the fibre layer, from the application surface to a depth which is least 50 %, especially at least 70 %, of the total thickness of the fibre layer, and, preferably, at least part of the binder is made to penetrate through the fibre layer, all the way to the opposite surface of the layer.

16. A method according to any of the preceding claims, **characterized in that** the natural fibres are cellulose or lignocellulose fibres, in particular, the natural fibres are fibres which are prepared from cellulose or lignocellulose raw materials, by using chemical or semi-chemical defibering, or they are fibres prepared by using mechanical defibering, in particular the natural fibres are essentially unrefined cellulose or lignocellulose fibres, in particular, the freeness of the semi-chemical and mechanical fibres is at least 300 ml/min, for example more than 450 and preferably more than 600 ml/min and, correspondingly, the Schopper-Riegler number of the chemical fibres is less than 35, for example under 25 and preferably under 20.

## Patentansprüche

1. Verfahren zur Herstellung einer Faserbahn, die eine Fasermatrix umfasst, die aus Naturfasern und möglicherweise Kunstfasern gebildet wird, wobei gemäß dem Verfahren
- eine wasserhaltige ebene Faserschicht aus Naturfasern und möglicherweise Kunstfasern bereitgestellt ist, welche Schicht eine wässrige Phase und eine faserige Phase umfasst, und
- diese Faserschicht getrocknet wird, um die wässrige Phase zu entfernen, wobei die Naturfasern und möglicherweise Kunstfasern gemeinsam eine Fasermatrix bilden,
**gekennzeichnet durch**
- Auftragen auf die wasserhaltige ebene Faserschicht eines Bindemittels, das über die wässrige Phase zumindest teilweise zwischen den Fasern eindringen kann, bevor Wasserstoffbindungen zwischen den Fasern gebildet werden,
wobei das Eindringen des Bindemittels in die Faserbahn während des Auftragens oder unmittelbar danach, durch Lenken einer Saugwirkung auf das Bindemittel von der gegenüberliegenden Seite der Faserbahn erleichtert wird, und
wobei die Faserbahn unter Verwendung von Schaumbildung gebildet wird.

2. Verfahren nach Anspruch 1, **dadurch gekennzeichnet, dass** das Bindemittel auf die wasserhaltige Faserschicht aufgetragen wird, wenn der Prozentsatz an Trockensubstanz dieser Schicht etwa 10-65%, zum Beispiel etwa 20-55%, insbesondere etwa 25-45% ist.

3. Verfahren nach Anspruch 1 oder 2, **dadurch gekennzeichnet, dass** das Bindemittel auf die wasserhaltige Faserschicht durch ein kontaktloses Auftragsverfahren aufgetragen wird, insbesondere unter Verwendung von Schaumbeschichtung, Sprühbeschichtung oder Vorhangbeschichtung.

4. Verfahren nach einem der vorstehenden Ansprüche, **dadurch gekennzeichnet, dass** das Bindemittel auf die wasserhaltige Faserschicht in der Form einer Lösung oder eines Gels aufgetragen wird, insbesondere in der Form einer wässrigen Lösung oder einer wässrigen Dispersion.

5. Verfahren nach einem der vorstehenden Ansprüche, **dadurch gekennzeichnet, dass** eine ausreichende Menge an Bindemittel zugegeben wird, um sicherzustellen, dass sein Prozentsatz des Trockengewichts der getrockneten Faserbahn 5-40%, vorzugsweise etwa 10-30% ist.

6. Verfahren nach einem der vorstehenden Ansprüche, **dadurch gekennzeichnet, dass** die Dehnung der getrockneten Faserbahn in der Maschinenrichtung mindestens 5%, zum Beispiel etwa 5-20%, zum Beispiel 8-15% und in der Querrichtung mindestens 5%, zum Beispiel 5-30%, vorzugsweise 10-20% ist.

7. Verfahren nach einem der vorstehenden Ansprüche, **dadurch gekennzeichnet, dass** die Faserbahn eben ist und aus zwei gegenüberliegenden ebenen Oberflächen besteht, wobei in diesem Fall das Bindemittel auf mindestens eine ihrer ebenen Oberflächen aufgetragen wird.

8. Verfahren nach einem der vorstehenden Ansprüche, **dadurch gekennzeichnet, dass** dem Bindemittel Substanzen, die imstande sind, die Eigenschaften der Faserbahn zu modifizieren, wie Pigmente, Feinmaterial, wie Feinmaterial auf Zellulosebasis oder Nanozellulose, Kunstfasern oder Weichmacher zugegeben werden.

9. Verfahren nach einem der vorstehenden Ansprüche, **dadurch gekennzeichnet, dass** der Faserbahn Zusatzstoffe beigefügt werden, mit welchen es möglich ist, die mechanischen und thermischen Eigenschaften der Faserbahn zu verbessern, wie Heißsiegelfähigkeit, Dehnbarkeit, Luftdurchlässigkeit, Bedruckbarkeit, Wärmeleitfähigkeit, Absorptionseigenschaften und Reibung.

10. Verfahren nach einem der vorstehenden Ansprüche, **dadurch gekennzeichnet, dass** die Naturfasern Zellulose oder Lignozellulose sind und die Kunstfasern thermoplastische Polymerfasern wie Polylactid, Glycolsäurepolymer, Polyolefin, Polyamid, Polyethylenterephthalat, Polyester, Polyvinylalkohol oder Zweikomponentenfasern (Bico-Fasern) sind oder regenerierte Zellulosefasern wie Viskose, Rayon, Lyozell oder Tencel-Fasern sind.

11. Verfahren nach einem der vorstehenden Ansprüche, **dadurch gekennzeichnet, dass** das Bindemittel ein natürliches Bindemittel oder ein Biopolymer ist, wie Stärke oder Stärkemodifikat oder -derivat, Chitosan, Alginat oder ein synthetisches Bindemittel, zum Beispiel ein Latex, wie Vinylacetat und Acrylatlatex oder ein Polyurethan oder SB-Latex, Polyvinylalkohol oder Polyvinylacetat und Gemische und Copolymere dieser Bindemittel, insbesondere das Bindemittel Vinylacetat oder Acrylatlatex oder ein Gemisch davon ist.

12. Verfahren nach einem der vorstehenden Ansprüche, **dadurch gekennzeichnet, dass** das Latex auf die Oberfläche der Faserschicht in der Form von Bindeschaum aufgetragen wird, dessen Prozentsatz an Latex 10-30 Gewichtsprozent sind.

13. Verfahren nach einem der vorstehenden Ansprüche, **dadurch gekennzeichnet, dass** der Prozentsatz an Naturfasern 60-95 Gewichtsteile und an Kunstfasern 5-40 Gewichtsteile ist und das Flächengewicht der Faserbahn etwa 20-200 g/m² ist.

14. Verfahren nach einem der vorstehenden Ansprüche, **dadurch gekennzeichnet, dass**
- eine Fasersuspension aus Naturfasern und Kunstfasern gebildet wird,
- die Fasersuspension durch Bahnbildung zu einer glatten Faserschicht gebildet wird und
- die Faserschicht getrocknet wird, um die Faserbahn herzustellen,
ein Bindemittel auf die Faserschicht aufgetragen wird, wenn der Prozentsatz an Trockensubstanz der Faserschicht etwa 20-50% ist, vorzugsweise die Bahn an der Papiermaschine hergestellt wird und das Bindemittel an einem Punkt zu der Faserschicht gebracht wird, der zwischen dem Sieb und den Trocknungsabschnitten der Papiermaschine liegt.

15. Verfahren nach einem der vorstehenden Ansprüche, **dadurch gekennzeichnet, dass** es möglich ist, das Bindemittel in der z-Richtung der Faserschicht von der Auftragsoberfläche zu einer Tiefe eindringen zu lassen, die mindestens 50%, insbesondere mindestens 70% der Gesamtdicke der Faserschicht ist, und vorzugsweise mindestens Teil des Bindemittels vollständig durch die Faserschicht bis zu gegenüberliegenden Oberfläche der Schicht durchdringen gelassen wird.

16. Verfahren nach einem der vorstehenden Ansprüche, **dadurch gekennzeichnet, dass** die Naturfasern Zellulose oder Lignozellulosefasern sind, insbesondere die Naturfasern Fasern sind, die aus Zellulose- oder Lignozellulosefaserrohmaterialien unter Verwendung von chemischer oder semi-chemischer Zerfaserung hergestellt werden, oder sie Fasern sind, die unter Verwendung von mechanischer Zerfaserung hergestellt werden, insbesondere die Naturfasern im Wesentlichen unveredelte Zellulose oder Lignozellulosefasern sind, insbesondere die Freiheit der semi-chemischen und mechanischen Fasern mindestens 300 ml/min, zum Beispiel mehr als 450 und vorzugsweise mehr als 600 ml/min ist und demensprechend die Schipper-Riegler-Zahl der chemischen Fasern kleiner als 35, zum Beispiel unter 25 und vorzugsweise unter 20 ist.

## Revendications

1. Procédé de fabrication d'une bande de fibres, qui comprend une matrice de fibres formée par des fibres naturelles et éventuellement des fibres synthétiques, procédé selon lequel
- une couche de fibres planes contenant de l'eau est fournie à partir de fibres naturelles et éventuellement de fibres synthétiques, laquelle couche comprend une phase aqueuse et une phase fibreuse, et
- cette couche de fibres est séchée afin d'éliminer la phase aqueuse, selon lequel les fibres naturelles et les éventuelles fibres synthétiques forment ensemble une matrice de fibres,
**caractérisé par**
- l'application sur la couche de fibres planes contenant de l'eau d'un liant qui est autorisé à pénétrer via la phase aqueuse au moins partiellement entre les fibres avant que des liaisons d'hydrogène soient formées entre les fibres,
dans lequel la pénétration du liant dans la bande de fibres, pendant l'application ou immédiatement après, est facilitée en dirigeant l'aspiration vers le liant depuis le côté opposé de la bande de fibres, et
dans lequel la bande de fibres est formée en utilisant une formation de mousse.

2. Procédé selon la revendication 1, **caractérisé en ce que** le liant est appliqué sur la couche de fibres contenant de l'eau, lorsque le pourcentage de matière sèche de cette couche est d'environ 10-65 %, par exemple d'environ 20-55 %, notamment d'environ 25-45 %.

3. Procédé selon la revendication 1 ou 2, **caractérisé en ce que** le liant est appliqué sur la couche de fibres contenant de l'eau au moyen d'un procédé d'application sans contact, en particulier en utilisant un revêtement par mousse, un revêtement par pulvérisation ou un revêtement par rideau.

4. Procédé selon l'une quelconque des revendications précédentes, **caractérisé en ce que** le liant est appliqué sur la couche de fibres contenant de l'eau sous la forme d'une solution ou d'un gel, notamment sous la forme d'une solution aqueuse ou d'une dispersion aqueuse.

5. Procédé selon l'une quelconque des revendications précédentes, **caractérisé en ce qu'**une quantité suffisante de liant est ajoutée pour garantir que son pourcentage du poids sec de la bande de fibres séchées est de 5-40 %, de préférence d'environ 10-30 %.

6. Procédé selon l'une quelconque des revendications précédentes, **caractérisé en ce que** l'allongement de la bande de fibres séchées dans la direction de machine est d'au moins 5 %, par exemple d'environ 5-20 %, par exemple de 8-15 %, et dans la direction transversale d'au moins 5 %, par exemple de 5-30 %, de préférence de 10-20 %.

7. Procédé selon l'une quelconque des revendications précédentes, **caractérisé en ce que** le voile de fibres est plan et est constitué de deux surfaces planes opposées, auquel cas le liant est appliqué sur au moins une de ses surfaces planes.

8. Procédé selon l'une quelconque des revendications précédentes, **caractérisé en ce que** l'on ajoute au liant des substances qui sont capables de modifier les propriétés de la bande de fibres, telles que des pigments, une matière fine, telle que des matières fines à base de cellulose ou de la nanocellulose, des fibres synthétiques ou des plastifiants.

9. Procédé selon l'une quelconque des revendications précédentes, **caractérisé en ce que** l'on amène à la bande de fibres des additifs avec lesquels il est possible d'améliorer les propriétés mécaniques et thermiques de la bande de fibres, telles que la thermoscellabilité, l'étirabilité, la perméabilité à l'air, l'imprimabilité, la conductivité thermique, les caractéristiques d'absorption et la friction.

10. Procédé selon l'une quelconque des revendications précédentes, **caractérisé en ce que** les fibres naturelles sont de la cellulose ou de la lignocellulose, et les fibres synthétiques sont des fibres polymères thermoplastiques, telles que le polylactide, le polymère d'acide glycolique, la polyoléfine, le polyamide, le polyéthylène téréphtalate, le polyester, l'alcool polyvinylique ou les fibres bicomposantes (bico), ou sont des fibres de cellulose régénérée, telles que des fibres de viscose, de rayonne, de Lyocell ou de Tencel.

11. Procédé selon l'une quelconque des revendications précédentes, **caractérisé en ce que** le liant est un liant naturel ou un biopolymère, tel que de l'amidon ou un modificateur ou dérivé d'amidon, un chitosan, un alginate, ou un liant synthétique, par exemple un latex, tel qu'un latex d'acétate de vinyle et d'acrylate ou un latex de polyuréthane ou de SB, un alcool polyvinylique ou un acétate de polyvinyle, et des mélanges et copolymères de ces liants, en particulier le liant est un latex d'acétate de vinyle ou d'acrylate ou un mélange de ceux-ci.

12. Procédé selon l'une quelconque des revendications précédentes, **caractérisé en ce que** le latex est amené sur la surface de la couche de fibres sous la forme d'une mousse de liant, dont le pourcentage de latex est de 10-30 % en poids.

13. Procédé selon l'une quelconque des revendications précédentes, **caractérisé en ce que** le pourcentage de fibres naturelles est de 60-95 parties en poids et de fibres synthétiques de 5-40 parties en poids, et le grammage de la bande de fibres est d'environ 20-200 g/m².

14. Procédé selon l'une quelconque des revendications précédentes, **caractérisé en ce que**
- une suspension de fibres est formée de fibres naturelles et de fibres synthétiques,
- la suspension de fibres est formée en une couche de fibres lisses par formation de toile, et
- la couche de fibres est séchée afin de préparer la bande de fibres,
un liant est appliqué sur la couche de fibres lorsque le pourcentage de matière sèche de la couche de fibres est d'environ 20-50 %, de préférence, la bande est formée au niveau de la machine à papier et le liant est amené à la couche de fibres au niveau d'un point qui est entre le fil et les sections de séchage de la machine à papier.

15. Procédé selon l'une quelconque des revendications précédentes, **caractérisé en ce qu'**il est possible de faire pénétrer le liant, dans la direction z de la bande de fibres, depuis la surface d'application jusqu'à une profondeur qui est d'au moins 50 %, notamment d'au moins 70 %, de l'épaisseur totale de la couche de fibres, et, de préférence, on fait pénétrer au moins une partie du liant à travers la couche de fibres jusqu'à la surface opposée de la couche.

16. Procédé selon l'une quelconque des revendications précédentes, **caractérisé en ce que** les fibres naturelles sont des fibres de cellulose ou de lignocellulose, en particulier, les fibres naturelles sont des fibres qui sont préparées à partir de matières premières de cellulose ou de lignocellulose, en utilisant un défibrage chimique ou semi-chimique, ou elles sont des fibres préparées en utilisant un défibrage mécanique, en particulier, les fibres naturelles sont essentiellement des fibres de cellulose ou de lignocellulose non raffinées, en particulier, le degré de raffinage des fibres semi-chimiques et mécaniques est d'au moins 300 ml/min, par exemple supérieur à 450 et de préférence supérieur à 600 ml/min et, de manière correspondante, le nombre de Schopper-Riegler des fibres chimiques est inférieur à 35, par exemple sous 25 et de préférence sous 20.
